# EUROPEAN PATENT SPECIFICATION

(11) **EP 3 081 587 B1**
(45) Date of publication and mention of the grant of the patent: **08.06.2022**
(21) Application number: 14877979.6
(22) Date of filing: 15.12.2014
(51) Int. Cl.: C08L 9/00, B60C 1/00, C08K 3/34, C08K 3/36, C08L 45/02, C08L 65/00, C08L 21/00, C08L 57/02, C08K 3/013, C08L 9/06

(54) **PNEUMATIC TIRE**
LUFTREIFEN
PNEUMATIQUE

(30) Priority: 07.01.2014 JP 2014001055
(43) Date of publication of application: 19.10.2016
(73) Proprietor: Sumitomo Rubber Industries, Ltd., Kobe-shi, Hyogo 651-0072 (JP)
(72) Inventor: MIYAZAKI Tatsuya, Kobe-shi Hyogo 651-0072 (JP)
(74) Representative: Manitz Finsterwald Patent- und Rechtsanwaltspartnerschaft mbB
(86) International application number: PCT/JP2014/083127
(87) International publication number: WO 2015/104955

(56) References cited:
- EP-A1- 2 799 480
- EP-A1- 2 985 311
- EP-A1- 3 064 543
- JP-A- 2000 143 877
- JP-A- 2009 503 167
- JP-A- 2012 116 983
- JP-A- 2012 255 076
- JP-A- 2013 014 708
- JP-A- 2013 071 938
- JP-A- 2013 147 617

## Description

### TECHNICAL FIELD

The present invention relates to a pneumatic tire including a tread formed from a rubber composition for tires.

### BACKGROUND ART

Pneumatic tires are made of a number of different components, including the tread and sidewall. These components impart their respective properties to the pneumatic tires. Treads, which make contact with the road surface, need to have wet grip performance and other properties for safety and the like. A method has been proposed which improves these properties by addition of aluminum hydroxide. Unfortunately, this method deteriorates abrasion resistance and elongation at break and is thus rarely used for manufacturing tires for general public roads.

Other methods include a method of increasing the styrene content or the vinyl content in solution-polymerized styrene-butadiene rubber, a method of using modified solution-polymerized styrene-butadiene rubber to control the tanδ curve, a method of increasing the amount of silica to provide a higher tanδ peak, and a method of adding a liquid resin. At present, it is still difficult to improve wet grip performance while maintaining other physical properties.

Patent Literature 1 discloses the use of a specific rubber component and a specific inorganic reinforcing agent such as aluminum hydroxide to improve wet grip performance, abrasion resistance, and processability. However, there is still room for improvement in achieving both wet grip performance and abrasion resistance, and a need exists for a further balanced improvement in properties including elongation at break. EP 3 064 543 Al is prior art under Art. 54(3) EPC and discloses a pneumatic tire comprising a tread formed from a rubber composition for tires, the rubber composition comprising: a rubber component containing 60 parts by mass of a polybutadiene rubber per 100 parts by mass of the rubber component, 60 parts by mass of wet silica per 100 parts by mass of the rubber component, 10 parts by mass of aluminum hydroxide having an average particle size of 0.6 µm and a nitrogen adsorption specific surface area of 15 m²/g per 100 parts by mass of the rubber component and 5 parts by mass of a liquid coumarone-indene resin having a softening point of 5°C to 15°C per 100 parts by mass of the rubber component;
EP 2 985 311 A1 is prior art under Art. 54 (3) EPC and discloses in its examples a pneumatic tire comprising a tread formed from a rubber composition for tires, the rubber composition comprising: a rubber component containing 30 parts by mass of a polybutadiene rubber and 70 parts by mass of a styrene-butadiene rubber per 100 parts by mass of the rubber component, 90 parts by mass of wet silica per 100 parts by mass of the rubber component, 10 parts by mass of aluminum hydroxide having an average particle size of 0.6 pm and a nitrogen adsorption specific surface area of 15 m²/g per 100 parts by mass of the rubber component and 10 parts by mass of a liquid coumarone-indene resin having a softening point of 10°C per 100 parts by mass of the rubber component or 10 parts by mass of a terpene phenole resin having a softening point of 115°C per 100 parts by mass of the rubber component;
EP 2 799 480 A1 has been published between the priority date and the filing date, and discloses a pneumatic tire having a tread produced from a rubber composition in which a content of an isoprene-based rubber in 100% by mass of a rubber component ranges from 10% by mass to 100% by mass, a content of a butadiene rubber in 100% by mass of the rubber component ranges from 0% by mass to 80% by mass, a content of a styrene-butadiene rubber in 100% by mass of the rubber component ranges from 0% by mass to 70% by mass, and a content of a terpene-based resin having a hydroxyl value that is less than or equal to 20 and a softening point ranging from 106°C to 124°C ranges from 1 part by mass to 50 parts by mass, per 100 parts by mass of the rubber component.

In JP 2012-116983 A a rubber composition is disclosed which has been formed into a tread. The rubber composition comprises styrene butadiene rubber as a rubber component, silica, aluminum hydroxide and a liquid coumarone indene resin having a softening point of 20 to 30 °C.

### CITATION LIST

### PATENT LITERATURE

Patent Literature 1: JP 4559573 B

### SUMMARY OF INVENTION

### TECHNICAL PROBLEM

The present invention aims to solve the problem and provide a pneumatic tire including a tread formed from a rubber composition for tires that shows a balanced improvement in wet grip performance, abrasion resistance, and elongation at break.

### SOLUTION TO PROBLEM

The present invention relates to a pneumatic tire, including a tread formed from a rubber composition for tires, the rubber composition containing:
a rubber component;
an inorganic reinforcing agent represented by the formula below, having an average particle size of 1.5 µm or less and a nitrogen adsorption specific surface area of 10 to 120 m²/g;
wet silica; and
at least one of a coumarone-indene resin having a softening point of -20°C to 45°C or a terpene-based resin having a softening point of 100°C to 170°C,
the rubber composition containing the inorganic reinforcing agent in an amount of 1 to 60 parts by mass per 100 parts by mass of the rubber component,
the rubber component contains styrene-butadiene rubber, kM₁ ·xSiO_{y}·zH₂O
wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10.

Preferably, the inorganic reinforcing agent has an average particle size of 0.69 µm or less and a nitrogen adsorption specific surface area of 10 to 50 m²/g,
the wet silica has a nitrogen adsorption specific surface area of 80 to 300 m²/g, and
the rubber composition contains the wet silica in an amount of 15 to 130 parts by mass per 100 parts by mass of the rubber component.

The rubber composition preferably contains the coumarone-indene resin in an amount of 0.5 to 60 parts by mass per 100 parts by mass of the rubber component.

The rubber composition preferably contains the terpene-based resin in an amount of 1 to 40 parts by mass per 100 parts by mass of the rubber component.

The rubber composition preferably contains, based on 100% by mass of the rubber component, 9% to 70% by mass of a polybutadiene rubber synthesized using a rare earth catalyst.

Preferably, the inorganic reinforcing agent is aluminum hydroxide, and the rubber composition is obtained by kneading at least the rubber component and the aluminum hydroxide at a discharge temperature of 150°C or higher.

The rubber composition is preferably obtained by kneading in which the discharge temperature is 160°C or higher.

The present invention relates also to the pneumatic tire according to claims 8-13.

### ADVANTAGEOUS EFFECTS OF INVENTION

The pneumatic tire of the present invention includes a tread formed from a rubber composition for tires which contains predetermined amounts of a rubber component, a specific inorganic reinforcing agent having a predetermined average particle size and a predetermined nitrogen adsorption specific surface area, wet silica, and a specific coumarone-indene resin and/or terpene-based resin having a predetermined softening point. Such a pneumatic tire shows a balanced improvement in wet grip performance, abrasion resistance, and elongation at break.

### BRIEF DESCRIPTION OF DRAWINGS

Fig. 1 is a schematic view showing an instantaneous reaction between aluminum hydroxide on the tire surface and silica on the road surface.
Fig. 2 shows an image of a curve of differential scanning calorimetry of aluminum hydroxide.

### DESCRIPTION OF EMBODIMENTS

The pneumatic tire of the present invention includes a tread formed from a rubber composition for tires and the rubber composition contains a rubber component, a specific inorganic reinforcing agent having a predetermined average particle size and a predetermined nitrogen adsorption specific surface area, wet silica, and a specific coumarone-indene resin and/or terpene-based resin having a predetermined softening point.

First, the rubber composition for tires forming a tread is explained.

The rubber composition contains a rubber component, a specific inorganic reinforcing agent having a predetermined average particle size and a predetermined nitrogen adsorption specific surface area, wet silica, and a specific coumarone-indene resin and/or terpene-based resin having a predetermined softening point.

The addition of an inorganic reinforcing agent such as aluminum hydroxide having a certain average particle size and a certain nitrogen adsorption specific surface area improves wet grip performance. This effect is presumably produced by the following effects (1) to (3).

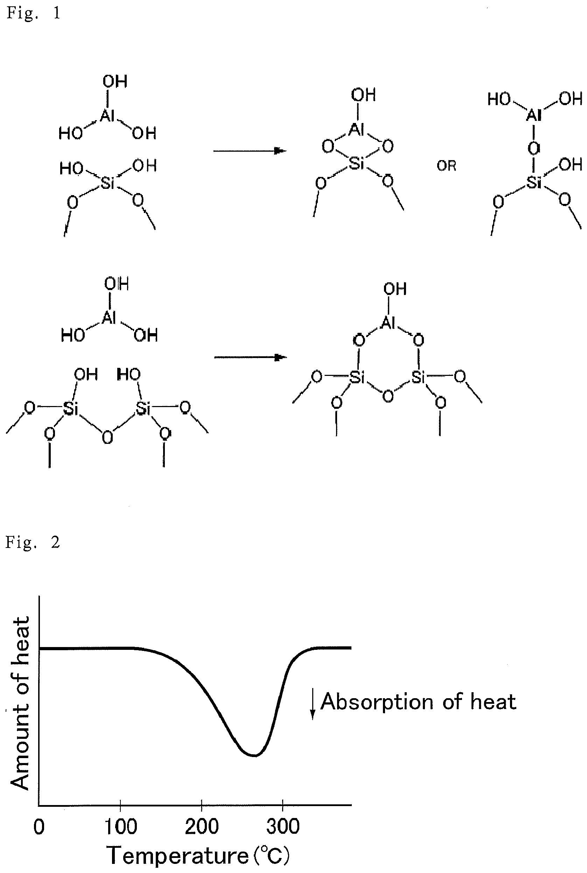

(1) During kneading, the added inorganic reinforcing agent such as aluminum hydroxide (Al(OH)₃) is partially converted to alumina (Al₂O₃) having a Mohs hardness equal to or higher than that of silica, or the inorganic reinforcing agent such as aluminum hydroxide binds to silica (through covalent bonding or dehydration) and is immobilized by the finely-dispersed silica chains in the rubber composition. Such metal oxide aggregates or inorganic reinforcing agent is considered to provide an anchoring effect, thereby enhancing wet grip performance.
(2) As a result of the contact (friction) between silicon dioxide on the road surface and the inorganic reinforcing agent, such as aluminum hydroxide, on the tire surface during running, covalent bonds are considered to be instantaneously formed as shown in Fig. 1, thereby improving wet grip performance.
(3) A part of the surface of tires on the wet road makes contact with the road surface through a water film. Usually, such a water film is considered to be evaporated by the friction heat generated at sites where the tire makes direct contact with the road surface. When aluminum hydroxide, for example, is incorporated, however, the friction heat is considered to contribute to the progress of an endothermic reaction of aluminum hydroxide on the tire surface as shown by "Al(OH)₃ → 1/2 Al₂O₃ + 3/2 H₂O", thereby resulting in reduced evaporation of the water film (moisture) . In the case where the water film is evaporated, a void space is formed between the tire surface and the road surface and thus the contact area between the road surface and the tire is reduced, resulting in a decrease in wet grip performance.

As described above, wet grip performance is improved by the effects of the addition of a conventional inorganic reinforcing agent such as aluminum hydroxide. However, abrasion resistance and elongation at break are usually deteriorated. Accordingly, it is difficult to achieve a balanced improvement in these properties. In the present invention, since an inorganic reinforcing agent such as aluminum hydroxide having a certain average particle size and a certain nitrogen adsorption specific surface area is incorporated, wet grip performance is improved while reducing the deterioration of abrasion resistance and elongation at break and maintaining the properties well. Thus, a balanced improvement in the properties is achieved. Further, in the present invention, since a specific coumarone-indene resin and/or terpene-based resin having a predetermined softening point is incorporated, in addition to the specific inorganic reinforcing, agent, abrasion resistance and elongation at break are markedly improved. Therefore, in the present invention, the balance of wet grip performance, abrasion resistance, and elongation at break, and even cut and chip resistance is synergistically improved.

The rubber component in the present invention is not particularly limited, and examples include isoprene-based rubbers such as natural rubber (NR) and polyisoprene rubber (IR), and diene rubbers such as polybutadiene rubber (BR), styrene-butadiene rubber (SBR), styrene-isoprene-butadiene rubber (SIBR), chloroprene rubber (CR), and acrylonitrile butadiene rubber (NBR). Preferred among these are isoprene-based rubbers, BR, and SBR as they provide good durability while ensuring good handling stability, good fuel economy, and good elongation at break. Particularly for summer tires, BR and SBR are preferably used in combination. For studless winter tires for which performance on ice is also important, BR and an isoprene-based rubber are preferably used in combination.

Any type of BR may be used, and examples include those commonly used in the tire industry, such as high-cis BR, 1,2-syndiotactic polybutadiene crystal (SPB)-containing BR, and BR synthesized using a rare earth catalyst (rare earth-catalyzed BR). Preferred among these is rare earth-catalyzed BR as it provides good durability while ensuring good handling stability, good fuel economy, and good elongation at break.

The rare earth-catalyzed BR may be a conventional one, and examples include those synthesized using rare earth catalysts (catalysts including lanthanide rare earth compounds, organic aluminum compounds, aluminoxanes, or halogen-containing compounds, optionally with Lewis bases). Preferred among these is Nd-catalyzed BR which is synthesized using a neodymium catalyst.

The NR, which is an isoprene-based rubber, may be one commonly used in the tire industry, such as SIR20, RSS#3, or TSR20. The IR may also be one commonly used in the tire industry, such as IR2200. Any type of SBR may be used, and examples include emulsion-polymerized SBR (E-SBR), solution-polymerized SBR (S-SBR), and modified SBR for silica prepared by modification with a compound interactive with silica. Preferred among these is modified SBR for silica as it strongly interacts with silica and thereby allows silica to be well dispersed so that fuel economy and abrasion resistance can be improved.

The modified SBR for silica may be a conventional one, such as SBR having a polymer chain end or backbone modified with any of various modifiers. Examples include modified SBRs described in, for example, JP 2010-077412 A, JP 2006-274010 A, JP 2009-227858 A, JP 2006-306962 A, and JP 2009-275178 A. Specifically, suitable is modified SBR having a Mw of 1.0 × 10⁵ to 2.5 × 10⁶, obtained by reaction with a modifier represented by the following formula (1): 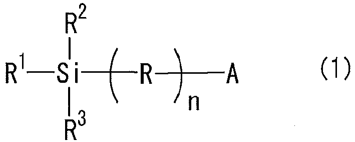 wherein n represents an integer of 1 to 10; R represents a divalent hydrocarbon group such as -CH₂-; R¹, R², and R³ each independently represent a C1-C4 hydrocarbyl group or a C1-C4 hydrocarbyloxy group, and at least one of R¹, R², and R³ groups is the hydrocarbyloxy group; and A represents a functional group containing a nitrogen atom.

In the present invention, the modified SBR for silica preferably has a bound styrene content of 25% by mass or more, more preferably 27% by mass or more. If the bound styrene content is less than 25% by mass, wet grip performance tends to be poor. Also, the bound styrene content is preferably 50% by mass or less, more preferably 45% by mass or less, still more preferably 40% by mass or less. If the bound styrene content is more than 50% by mass, fuel economy may deteriorate.

The styrene content is determined by ¹H-NMR.

In the case of the rubber composition for use in summer tires, the amount of BR, based on 100% by mass of the rubber component, is preferably 9% by mass or more, more preferably 15% by mass or more, while it is preferably 70% by mass or less, more preferably 65% by mass or less. If the amount is less than 9% by mass, sufficient abrasion resistance may not be obtained. If the amount is more than 70% by mass, wet grip performance may be poor. In order to achieve high dry grip performance, the rubber composition may suitably be an SBR/NR compound and may not contain BR.

Particularly in the case of the rubber composition for summer tires containing a BR synthesized using a rare earth catalyst, the amount of BR, based on 100% by mass of the rubber component, is preferably 9% by mass or more, more preferably 14% by mass or more, while it is preferably 70% by mass or less, more preferably 65% by mass or less. If the amount is less than 9% by mass, sufficient abrasion resistance may not be obtained. If the amount is more than 70% by mass, abrasion resistance may rather deteriorate, and elongation at break may also deteriorate.

In the case of the rubber composition for use in summer tires, the amount of SBR, based on 100% by mass of the rubber component, is preferably 10% by mass or more, more preferably 20% by mass or more, still more preferably 30% by mass or more. The upper limit of the amount of SBR is not particularly limited, and may be 100% by mass, preferably 90% by mass or less. If the amount is less than 10% by mass, grip performance or cure reversion resistance may be poor.

In the case of the rubber composition for use in studless winter tires, the amount of BR, based on 100% by mass of the rubber component, is preferably 9% by mass or more, more preferably 30% by mass or more, still more preferably 50% by mass or more, while it is preferably 70% by mass or less, more preferably 65% by mass or less, still more preferably 60% by mass or less. If the amount is less than 9% by mass, it is difficult to reduce hardness at low temperatures (-10°C to 10°C) so that grip performance at low temperatures (performance on ice, wet grip performance) may be poor. If the amount is more than 70% by mass, abrasion resistance and performance on ice may be rather reduced, and processability may also be poor.

Particularly in the case of the rubber composition for studless winter tires containing a BR synthesized using a rare earth catalyst, the amount of BR, based on 100% by mass of the rubber component, is preferably 9% by mass or more, more preferably 30% by mass or more, still more preferably 50% by mass or more, while it is preferably 70% by mass or less, more preferably 65% by mass or less, still more preferably 60% by mass or less. If the amount is less than 9% by mass, performance on ice or abrasion resistance may deteriorate. If the amount is more than 70% by mass, abrasion resistance may rather deteriorate.

In the case of the rubber composition for use in studless winter tires, the amount of isoprene-based rubber, based on 100% by mass of the rubber component, is preferably 10% by mass or more, more preferably 20% by mass or more, still more preferably 30% by mass or more, while it is preferably 80% by mass or less, more preferably 70% by mass or less, still more preferably 60% by mass or less. If the amount is less than 10% by mass, dry grip performance or processability may deteriorate. If the amount is more than 80% by mass, grip performance at low temperatures (performance on ice, wet grip performance) may be poor.

The rubber composition in the present invention contains an inorganic reinforcing agent represented by the formula below, having a certain average particle size and a certain nitrogen adsorption specific surface area:

kM₁·xSiO_{y}·zH₂O

wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10.

Examples of the inorganic reinforcing agent include alumina, alumina hydrate, aluminum hydroxide, magnesium hydroxide, magnesium oxide, talc, titanium white, titanium black, calcium oxide, calcium hydroxide, magnesium aluminum oxide, clay, pyrophyllite, bentonite, aluminum silicate, magnesium silicate, calcium silicate, calcium aluminum silicate, magnesium silicate, zirconium, and zirconium oxide. These inorganic compounds may be used alone, or two or more of these may be used in combination. Preferred among these are inorganic reinforcing agents in which M₁ is Al or Zr, and aluminum hydroxide or zirconium oxide is more preferred, because the oxide layer formed upon contact with air produces a scratching effect to improve wet grip performance and also provides good abrasion resistance. Aluminum hydroxide is particularly preferred as it further provides good kneading productivity and good roll processability.

The inorganic reinforcing agent has an average particle size of 1.5 µm or less, preferably 0.69 or less, more preferably 0.6 µm or less, but preferably 0.2 µm or more, more preferably 0.25 pm or more, still more preferably 0.4 µm or more. If the average particle size is more than 1.5 µm, abrasion resistance and wet grip performance may be reduced, while if the average particle size is less than 0.2 µm, abrasion resistance or elongation at break may be rather reduced due to self-aggregation of the inorganic reinforcing agent. The average particle size of the inorganic reinforcing agent is a number average particle size which is measured with a transmission electron microscope.

The inorganic reinforcing agent has a nitrogen adsorption specific surface area (N₂SA) of 3 to 120 m²/g. If the N₂SA is out of the above range, abrasion resistance and wet grip performance may deteriorate. The lower limit of the N₂SA is preferably 6 m²/g or more, more preferably 10 m²/g or more, still more preferably 12 m²/g, while the upper limit of the N₂SA is preferably 115 m²/g or less, more preferably 60 m²/g or less, still more preferably 50 m²/g or less, particularly preferably 40 m²/g or less, most preferably 20 m²/g or less. The N₂SA is determined by the BET method in accordance with ASTM D3037-81. Please note that in view of plant capacity, it is difficult to prepare an inorganic reinforcing agent having a N₂SA of 130 m²/g or more by dry grinding.

In order to ensure the abrasion resistance and wet grip performance of tires and to reduce metal wear of Banbury mixers or extruders, the inorganic reinforcing agent preferably has a Mohs hardness of 7 like silica, or less than 7, more preferably 2 to 5. Mohs hardness, which is one of mechanical properties of materials, is a measure commonly used through the ages in mineral-related fields. Mohs hardness is measured by scratching a material (e.g. aluminum hydroxide) to be analyzed for hardness with a reference material, and determining the presence or absence of scratches.

In particular, it is preferred to use an inorganic reinforcing agent which has a Mohs hardness of less than 7 and whose thermal decomposition product has a Mohs hardness of 8 or more. For example, aluminum hydroxide, which has a Mohs hardness of about 3, prevents abrasion (wear) of Banbury mixers or rolls. Further, aluminum hydroxide in the upper surface layer undergoes a dehydration reaction (transition) due to vibration or heat build-up during running and partially due to kneading, and thus the aluminum hydroxide is converted to alumina having a Mohs hardness of about 9, which is equal to or higher than the hardness of the stones on the road surface. Accordingly, excellent abrasion resistance and excellent wet grip performance can be obtained. It should be noted that the interior of the aluminum hydroxide particles needs not to be entirely converted, and their partial conversion can produce the effect of scratching the road surface. Moreover, aluminum hydroxide and alumina are stable to water, bases, and acids, and neither inhibit vulcanization nor promote oxidative degradation. The inorganic reinforcing agent after the transition more preferably has a Mohs hardness of 7 or more, without any upper limit. Diamond has the highest hardness of 10.

The inorganic reinforcing agent preferably has a thermal decomposition onset temperature (DSC endothermic onset temperature) of 160°C to 500°C, more preferably 170°C to 400°C. If the temperature is lower than 160°C, thermal decomposition or reaggregation may excessively proceed during kneading, and the metal of the kneader rotor blades, the container wall, or the like may be excessively worn. The thermal decomposition onset temperature of the inorganic reinforcing agent is determined by differential scanning calorimetry (DSC). Moreover, the thermal decomposition includes a dehydration reaction.

The inorganic reinforcing agent may be a commercial product that has the above-described average particle size and N₂SA properties, and may also be, for example, an inorganic reinforcing agent having been processed, for example, ground, into particles having the above properties. The grinding may be carried out by conventional methods such as wet grinding or dry grinding using, for example, a jet mill, a current jet mill, a counter jet mill, a contraplex mill, or the like.

If necessary, particles having a certain average particle size and a certain N₂SA may be prepared by fractionation by a membrane filtering method often employed in medical fields or bio-fields, before use as a compounding agent for rubber.

The amount of the inorganic reinforcing agent per 100 parts by mass of the rubber component is 1 part by mass or more, preferably 2 parts by mass or more, more preferably 3 parts by mass or more. If the amount is less than 1 part by mass, sufficient wet grip performance may not be obtained. Also, the amount of the inorganic reinforcing agent is 60 parts by mass or less, preferably 55 parts by mass or less, more preferably 50 parts by mass or less. If the amount is more than 60 parts by mass, abrasion resistance may deteriorate to an extent that cannot be compensated by controlling other compounding agents, and tensile strength and the like may also deteriorate.

Regarding the wet silica in the present invention, the wet silica preferably has a N₂SA of 80 m²/g or more, more preferably 110 m²/g or more, still more preferably 150 m²/g or more, but preferably 300 m²/g or less, more preferably 250 m²/g or less, still more preferably 200 m²/g or less. If the N₂SA is less than 80 m²/g, abrasion resistance may be reduced. If the N₂SA is more than 300 m²/g, processability and fuel economy may be reduced. The N₂SA of the wet silica is determined as described for the inorganic reinforcing agent.

The amount of wet silica per 100 parts by mass of the rubber component is preferably 15 parts by mass or more, more preferably 20 parts by mass or more, still more preferably 40 parts by mass or more. If the amount is less than 15 parts by mass, sufficient abrasion resistance and sufficient wet grip performance may not be obtained. The amount of wet silica is also preferably 130 parts by mass or less, more preferably 110 parts by mass or less, still more preferably 100 parts by mass or less. If the amount is more than 130 parts by mass, fuel economy may be reduced.

The rubber composition in the present invention may contain other fillers, such as carbon black, in addition to the inorganic reinforcing agent and wet silica. Any type of carbon black may be used, and fine particle carbon black is preferred in order to sufficiently achieve the effects of the present invention.

The carbon black preferably has a N₂SA of 80 m²/g or more, more preferably 100 m²/g or more, but preferably 200 m²/g or less, more preferably 180 m²/g or less. When the N₂SA falls within the above range, the effects of the present invention can be sufficiently achieved. The N₂SA of carbon black can be determined in accordance with the method A set forth in JIS K 6217.

The amount of carbon black per 100 parts by mass of the rubber component is preferably 1 part by mass or more, more preferably 3 parts by mass or more, still more preferably 5 parts by mass or more, while it is preferably 100 parts by mass or less, more preferably 50 parts by mass or less, still more preferably 30 parts by mass or less. If the amount is less than 1 part by mass, sufficient abrasion resistance and sufficient elongation at break may not be obtained. If the amount is more than 100 parts by mass, sufficient wet grip performance may not be obtained.

The rubber composition may incorporate a silane coupling agent. For example, compounds represented by the formula (I) below can be suitably used. When the silane coupling agent represented by formula (I) is incorporated together with the rubber component and wet silica, the silica can be well dispersed so that wet grip performance and abrasion resistance can be markedly improved. Further, since the silane coupling agent represented by formula (I) is less likely to cause compound scorch, the rubber composition can be discharged at high temperature in the production.

(CₚH₂ₚ₊₁O)₃Si-C_{q}H_{2q}-S-CO-CₖH₂ₖ₊₁ (I)

In the formula, p represents an integer of 1 to 3, q represents an integer of 1 to 5, and k represents an integer of 5 to 12.

The symbol p represents an integer of 1 to 3, preferably of 2. If p is 4 or more, the coupling reaction tends to slow down.

The symbol q represents an integer of 1 to 5, preferably of 2 to 4, more preferably of 3. If q is 0 or 6 or more, such a silane coupling agent is difficult to synthesize.

The symbol k represents an integer of 5 to 12, preferably of 5 to 10, more preferably of 6 to 8, still more preferably of 7.

Examples of the silane coupling agent represented by formula (I) include NXT available from Momentive Performance Materials. The silane coupling agent represented by formula (I) may be used alone, or together with other silane coupling agents, such as NXT-Z45 available from Momentive Performance Materials, and Si69 and Si75 available from EVONIK-DEGUSSA. The amount of silane coupling agent per 100 parts by mass of silica is preferably 0.5 to 20 parts by mass, more preferably 1 to 10 parts by mass, still more preferably 2 to 7 parts by mass. When the amount falls within the above range, the effects of the present invention can be sufficiently achieved.

The rubber composition in the present invention contains a coumarone-indene resin having a softening point of -20°C to 45°C and/or a terpene-based resin having a softening point of 100°C to 170°C. The incorporation of the coumarone-indene resin and/or the terpene-based resin improves abrasion resistance and elongation at break, thereby compensating deterioration of abrasion resistance caused by the use of the inorganic reinforcing agent.

The coumarone indene resin refers to a resin containing coumarone and indene as the monomers forming the skeleton (backbone) of the resin. Examples of monomers other than coumarone and indene contained in the skeleton include styrene, α-methylstyrene, methylindene, and vinyltoluene.

The coumarone-indene resin has a softening point of -20°C to 45°C. The upper limit of the softening point is preferably 40°C or lower, more preferably 35°C or lower. The lower limit of the softening point is preferably -10°C or higher, more preferably -5°C or higher. If the softening point is higher than 45°C, fuel economy tends to deteriorate. If the softening point is lower than -20°C, such a coumarone-indene resin is difficult to produce and may also be changed in properties during use because it easily migrates to other tire components and is highly volatile.

As used herein, the softening point of the coumarone-indene resin is determined according to JIS K 6220-1:2001 with a ring and ball softening point measuring apparatus and is defined as the temperature at which the ball drops down.

Examples of the terpene-based resin to be used include terpene resins such as α-pinene resin, β-pinene resin, limonene resin, dipentene resin, and β-pinene/limonene resin; aromatic modified terpene resins made from terpene compounds and aromatic compounds; terpene phenol resins made from terpene compounds and phenolic compounds; and hydrogenated terpene resins obtained by hydrogenating terpene resins. Examples of aromatic compounds that can be used as the starting material of the aromatic modified terpene resin include styrene, α-methylstyrene, vinyltoluene, and divinyltoluene. Moreover, examples of phenolic compounds that can be used as the starting material of the terpene phenol resin include phenol, bisphenol A, cresol, and xylenol.

The terpene-based resin has a softening point of 100°C to 170°C. The upper limit of the softening point is preferably 165°C or lower, more preferably 160°C or lower. The lower limit of the softening point is preferably 105°C or higher, more preferably 108°C or higher, still more preferably 112°C or higher. Terpene-based resins having a softening point of higher than 170°C tend not to be easily dispersed during kneading. Terpene-based resins having a softening point of lower than 100°C tend not to allow the NR phase and the BR phase to be easily finely divided. In the present invention, the softening point of the terpene-based resin can be determined as described for the softening point of the coumarone-indene resin.

The amount of the coumarone-indene resin per 100 parts by mass of the rubber component is preferably 0.5 parts by mass or more, more preferably 1 part by mass or more, still more preferably 2 parts by mass or more, while it is preferably 60 parts by mass or less, more preferably 50 parts by mass or less, still more preferably 45 parts by mass or less. If the amount is less than 0.5 parts by mass, abrasion resistance or elongation at break may be insufficiently improved. If the amount is more than 60 parts by mass, abrasion resistance and elongation at break may not improve and fuel economy may deteriorate.

The amount of the terpene-based resin per 100 parts by mass of the rubber component is 1 part by mass or more, preferably 3 parts by mass or more, while it is preferably 40 parts by mass or less, more preferably 30 parts by mass or less. If the amount is less than 1 part by mass, abrasion resistance and elongation at break may be insufficiently improved. If the amount is more than 40 parts by mass, abrasion resistance and elongation at break may not improve and fuel economy may deteriorate.

The rubber composition in the present invention may appropriately incorporate, in addition to the above-described components, compounding agents commonly used in the tire industry, such as wax, zinc oxide, an antioxidant, and other materials.

The rubber composition can be prepared by known methods that involve kneading steps such as a base kneading step and a final kneading step. The kneading steps can be carried out, for example, by kneading the above components using a kneading machine. Conventional kneading machines can be used, such as a Banbury mixer, a kneader, or an open roll mill.

In the step of kneading at least the rubber component and the inorganic reinforcing agent (e.g. , which corresponds to the base kneading step if the base kneading step is carried out in a single step, or the step of introducing and kneading the inorganic reinforcing agent with the rubber component if the base kneading step is divided into a series of steps as described later), for example, in the base kneading step, the discharge temperature is 150°C or higher, preferably 155°C or higher, more preferably 160°C or higher, still more preferably 165°C or higher, particularly preferably 170°C or higher. For example, the thermal decomposition (dehydration reaction) of aluminum hydroxide occurs in a temperature range as shown in Fig. 2, or in other words aluminum hydroxide has an endothermic peak with a thermal decomposition onset temperature (DSC endothermic onset temperature) of 220°C to 350°C. However, from the results of wet grip performance or abrasion resistance obtained in a rubber kneading test, the dehydration reaction with silica as shown in Fig. 1 is considered to occur from around 150°C. Hence, when the above discharge temperature is employed, aluminum hydroxide is moderately converted to alumina so that a good balance of the effects (1) to (3) can be achieved, and thus wet grip performance can be markedly improved. If the discharge temperature is lower than 150°C, aluminum hydroxide in the rubber composition is less likely to be converted to alumina, so that wet grip performance may be reduced. Conversely, the upper limit of the discharge temperature is not particularly limited, and may be appropriately adjusted so that desired properties can be obtained without causing compound scorch. The discharge temperature is preferably 190°C or lower, more preferably 185°C or lower.

The base kneading step may be a single step in which the rubber component, the inorganic reinforcing agent, and the like are kneaded, or alternatively may be divided into a series of steps such as: X-kneading in which the rubber component, carbon black, 2/3 silica, and 2/3 silane coupling agent are kneaded, Y-kneading in which the kneaded mixture obtained by X-kneading, the remaining silica, the remaining silane coupling agent, and the other components, excluding sulfur and vulcanization accelerators, are kneaded, and Z-kneading in which the kneaded mixture obtained by Y-kneading is re-kneaded. In this case, the inorganic reinforcing agent may be kneaded at any time, such as during the X-kneading, Y-kneading, or Z-kneading.

The base kneading step may be followed by, for example, a final kneading step in which the resulting kneaded mixture 1 is kneaded with components such as a vulcanizing agent, e.g. sulfur, and a vulcanization accelerator using a kneading machine as described above (for example, the discharge temperature is 80°C to 110°C), which is then followed by a vulcanization step in which the resulting kneaded mixture 2 (unvulcanized rubber composition) is vulcanized and reacted at 130°C to 190°C for 5 to 30 minutes, whereby the rubber composition in the present invention can be produced.

The rubber composition in the present invention is used in treads for tires.

The pneumatic tire of the present invention can be produced from the above-described rubber composition by usual methods. Specifically, the pneumatic tire can be produced as follows: an unvulcanized rubber composition containing various additives as appropriate is extruded into the shape of a tread of a tire, and formed on a tire building machine and assembled with other tire components to build an unvulcanized tire, and then the unvulcanized tire is heated and pressurized in a vulcanizer.

The pneumatic tire of the present invention is suitable for passenger vehicles, large passenger vehicles, large SUVs, heavy load vehicles such as trucks and buses, and light trucks. The pneumatic tire can be used as a summer tire or studless winter tire for these vehicles.

### EXAMPLES

The present invention is more specifically described with reference to non-limiting examples.

### <Preparation of chain end modifier>

A 100-mL measuring flask was charged in a nitrogen atmosphere with 23.6 g of 3-(N,N-dimethylamino)propyltrimethoxysilane (AZmax. Co.) and then with anhydrous hexane (Kanto Chemical Co., Inc.) to give a total volume of 100 mL, whereby a chain end modifier was prepared.

### <Copolymer Preparation 1>

A sufficiently nitrogen-purged, 30 L pressure-resistant vessel was charged with 18 L of n-hexane, 740 g of styrene (Kanto Chemical Co., Inc.), 1,260 g of butadiene, and 10 mmol of tetramethylethylenediamine, and the temperature was raised to 40°C. Next, after 10 mL of butyllithium was added to the mixture, the temperature was raised to 50°C, followed by stirring for three hours. Subsequently, 11 mL of the chain end modifier was added to the resulting mixture, followed by stirring for 30 minutes. After 15 mL of methanol and 0.1 g of 2,6-tert-butyl-p-cresol were added to the reaction solution, the reaction solution was put in a stainless steel vessel containing 18 L of methanol and then aggregates were collected. The aggregates were dried under reduced pressure for 24 hours to give a modified SBR. The modified SBR had a Mw of 270,000, a vinyl content of 56%, and a styrene content of 37% by mass.

The Mw, vinyl content, and styrene content of the modified SBR were analyzed by the methods described below.

### <Measurement of weight average molecular weight (Mw)>

The weight average molecular weight (Mw) of the modified SBR was measured using a gel permeation chromatograph (GPC) (GPC-8000 series available from Tosoh Corporation, detector: differential refractometer, column: TSKGEL SUPERMALTPORE HZ-M available from Tosoh Corporation) and calibrated with polystyrene standards.

### <Measurement of vinyl content and styrene content>

The structure of the modified SBR was identified using a device of JNM-ECA series available from JEOL Ltd. The vinyl content and the styrene content in the modified SBR were calculated from the results.

The chemicals used in the examples and comparative examples are listed below.
NR: TSR20
BR 1: CB25 (high-cis BR synthesized with a Nd catalyst, Tg: -110°C) available from LANXESS
BR 2: CB29 TDAE (high-cis oil-extended BR synthesized with a Nd catalyst, containing 37.5 parts by mass of TDAE per 100 parts by mass of the rubber component) available from LANXESS
BR 3: UBEPOL BR150B (high-cis BR synthesized with a Co catalyst) available from Ube Industries, Ltd.
SBR: Modified SBR prepared in Copolymer Preparation 1
Carbon black 1: HP160 (N₂SA: 165 m²/g) available from Columbia Carbon
Carbon black 2: SHOBLACK N220 (N₂SA: 111 m²/g) available from Cabot Japan K.K.
Silica 1: ULTRASIL VN3 (N₂SA: 175 m²/g) available from Evonik
Silica 2: ULTRASIL U360 (N₂SA: 50 m²/g) available from Evonik
Inorganic reinforcing agent 1: Dry ground product of ATH#B (aluminum hydroxide) available from Sumitomo Chemical Co., Ltd. (average particle size: 0.15 µm, N₂SA: 130 m²/g, Mohs hardness: 3, Mohs hardness of thermal decomposition product (alumina): 9)
Inorganic reinforcing agent 2: Dry ground product of ATH#B (average particle size: 0.21 µm, N₂SA: 95 m²/g, Mohs hardness: 3, Mohs hardness of thermal decomposition product (alumina): 9)
Inorganic reinforcing agent 3: Dry ground product of ATH#B (average particle size: 0.25 µm, N₂SA: 75 m²/g, Mohs hardness: 3, Mohs hardness of thermal decomposition product (alumina): 9)
Inorganic reinforcing agent 4: Dry ground product of ATH#B (average particle size: 0.4 µm, N₂SA: 35 m²/g, Mohs hardness: 3, Mohs hardness of thermal decomposition product (alumina): 9)
Inorganic reinforcing agent 5: ATH#B (average particle size: 0.6 µm, N₂SA: 15 m²/g, Mohs hardness: 3, Mohs hardness of thermal decomposition product (alumina): 9)
Inorganic reinforcing agent 6: ATH#C (aluminum hydroxide, average particle size: 0.8 µm, N₂SA: 7.0 m²/g, Mohs hardness: 3, Mohs hardness of thermal decomposition product (alumina): 9) available from Sumitomo Chemical Co., Ltd.
Inorganic reinforcing agent 7: C-301N (aluminum hydroxide, average particle size: 1.0 µm, N₂SA: 4.0 m²/g, Mohs hardness: 3, Mohs hardness of thermal decomposition product (alumina): 9) available from Sumitomo Chemical Co., Ltd.
Inorganic reinforcing agent 8: C-303 (aluminum hydroxide, average particle size: 3.1 µm, N₂SA: 2.0 m²/g, Mohs hardness: 3, Mohs hardness of thermal decomposition product (alumina): 9) available from Sumitomo Chemical Co., Ltd.
Inorganic reinforcing agent 9: prepared by fractionation of ATH#C by a membrane filtering method (average particle size: 0.67 µm, N₂SA: 47 m²/g, Mohs hardness: 3, Mohs hardness of thermal decomposition product (alumina): 9)
Inorganic reinforcing agent 10: Wet-synthesized product (aluminum hydroxide, average particle size: not measurable, N₂SA: 274 m²/g, Mohs hardness: 3, Mohs hardness of thermal decomposition product (alumina): 9) available from Toda Kogyo Corp.
Inorganic reinforcing agent 11: Wet-synthesized product (aluminum hydroxide, average particle size: not measurable, N₂SA: 170 m²/g, Mohs hardness: 3, Mohs hardness of thermal decomposition product (alumina): 9) available from Toda Kogyo Corp.
Coumarone-indene resin 1: NOVARES C10 (liquid coumarone-indene resin, softening point: 10°C) available from Rutgers Chemicals
Coumarone-indene resin 2: NOVARES C30 (coumarone-indene resin, softening point: 30°C) available from Rutgers Chemicals
Coumarone-indene resin 3: NOVARES C50 (coumarone-indene resin, softening point: 50°C) available from Rutgers Chemicals
Coumarone-indene resin 4: prepared by fractionation of NOVARES C10 available from Rutgers Chemicals by gel permeation chromatography (GPC) (mainly containing low molecular weight components, softening point: -22°C)
Terpene-based resin 1: YS Polyster T160 (softening point: 160°C, terpene phenol resin) available from Yasuhara Chemical Co., Ltd.
Terpene-based resin 2: YS Polyster T115 (softening point: 115°C, terpene phenol resin) available from Yasuhara Chemical Co., Ltd.
Terpene-based resin 3: YS Resin PX1150N (softening point: 115°C, β-pinene resin) available from Yasuhara Chemical Co., Ltd.
Terpene-based resin 4: YS Resin PX800 (softening point: 80°C, β-pinene resin) available from Yasuhara Chemical Co., Ltd.
Terpene-based resin 5: YS Polyster T180 (softening point: 180°C, terpene phenol resin, trial product) available from Yasuhara Chemical Co., Ltd.
Styrene-based resin: Sylvares SA85 (softening point: 85°C) available from Arizona Chemical
Oil 1: Process P-200 available from Japan Energy Corporation
Oil 2: Vivatec 500 available from H&R
Wax: Ozoace 0355 available from Nippon Seiro Co., Ltd.
Antioxidant 1: Antigene 6C
(N-(1,3-dimethylbutyl)-N'-phenyl -p-phenylenediamine) available from Sumitomo Chemical Co., Ltd.
Antioxidant 2: NOCRAC 224 (2,2,4-trimethyl-1,2-dihydroquinoline polymer) available from Ouchi Shinko Chemical Industrial Co., Ltd.
Stearic acid: Stearic acid "Tsubaki" available from NOF Corporation
Zinc oxide: Ginrei R (average particle size: 0.29 µm, N₂SA: 4 m²/g) available from Toho Zinc Co., Ltd.
Silane coupling agent 1: Si75 available from Evonik
Silane coupling agent 2: NXT (silane coupling agent represented by the above formula (I) where p = 2, q = 3, and k = 7) available from Momentive Performance Materials
Sulfur: HK-200-5 (powdered sulfur containing 5% by mass of oil) available from Hosoi Chemical Industry Co., Ltd.
Vulcanization accelerator 1: Nocceler NS-G (N-tert-butyl-2-benzothiazolylsulfenamide) available from Ouchi Shinko Chemical Industrial Co., Ltd.
Vulcanization accelerator 2: Nocceler D (1,3-diphenylguanidine) available from Ouchi Shinko Chemical Industrial Co., Ltd.

### <Examples and Comparative Examples>

According to the formulations and kneading conditions for summer tires shown in Table 1 and those for studless winter tires shown in Table 2, the whole amounts of the rubber component and carbon black, two-thirds of the amount of silica, and two-thirds of the amount of silane coupling agent were first kneaded for five minutes using a Banbury mixer (X-kneading).

Next, the kneaded mixture obtained by X-kneading, the remaining silica, and the remaining silane coupling agent were kneaded, and the other components, excluding the sulfur and vulcanization accelerators, were kneaded therewith, followed by further kneading for five minutes (Y-kneading).

The kneaded mixture obtained by Y-kneading was again kneaded for four minutes (Z-kneading). This Z-kneading was performed only for summer tires.

To the resulting kneaded mixture were then added the sulfur and vulcanization accelerators, followed by kneading for four minutes using an open roll mill (final kneading) to prepare an unvulcanized rubber composition.

The unvulcanized rubber composition was press-vulcanized at 170°C for 12 minutes to prepare a vulcanized rubber composition.

Separately, the unvulcanized rubber composition was shaped into a tread, assembled with other tire components on a tire building machine, and press-vulcanized at 170°C for 12 minutes to prepare a test tire (tire size: 245/40R18).

The alumina or aluminum hydroxide was added at the time indicated in Table 1 or 2.

The unvulcanized rubber compositions and test tires thus prepared were evaluated as follows. Tables 1 and 2 show the results.

### (Wet grip performance)

The test tires were mounted on a front-engine, rear-wheel-drive car with a displacement of 2000 cc made in Japan. A test driver drove the car 10 laps around a test track with wet asphalt road conditions, and then evaluated the control stability during steering. The results are expressed as an index with Comparative Example 1 or 11 set equal to 100. A higher index indicates better wet grip performance. Tires with an index of 110 or higher have good wet grip performance.

### (Abrasion resistance)

The test tires were mounted on a front-engine, rear-wheel-drive car with a displacement of 2000 cc made in Japan. A test driver drove the car in a test track with dry asphalt road conditions. Then, the remaining groove depth in the tire tread rubber (initial depth: 8.0 mm) was measured to evaluate abrasion resistance. The larger the remaining groove depth is, the better the abrasion resistance is. The remaining groove depths are expressed as an index with Comparative Example 1 or 11 set equal to 100. A higher index indicates better abrasion resistance.

### (Tensile Test)

No. 3 dumbbell-shaped test pieces formed of the vulcanized rubber composition were subjected to a tensile test at 25°C according to JIS K 6251 "Rubber, vulcanized or thermoplastics -- Determination of tensile stress-strain properties," to measure the elongation at break EB (%). The EB values are expressed as an index with Comparative Example 1 or 11 set equal to 100. A higher EB indicates better elongation at break.

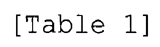

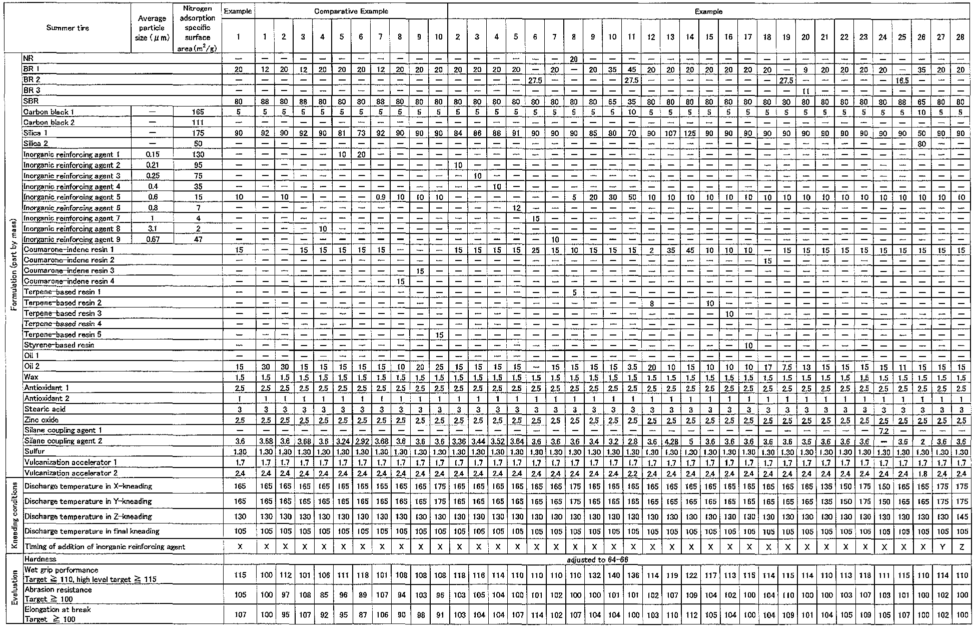

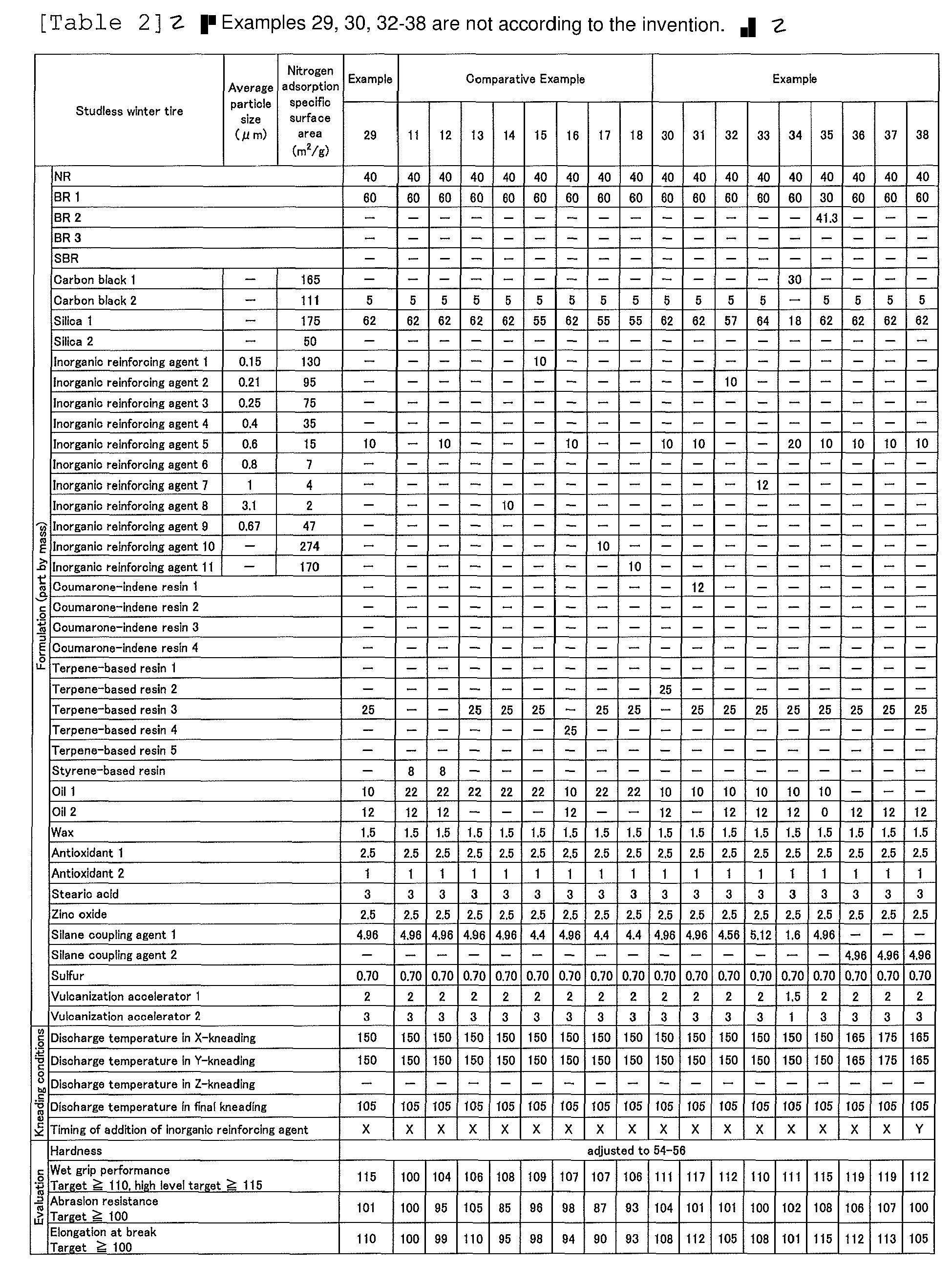

The results of Tables 1 and 2 clearly show that the balance of wet grip performance, abrasion resistance, and elongation at break was markedly improved in Examples in which a specific inorganic reinforcing agent having a predetermined average particle size and a predetermined nitrogen adsorption specific surface area and a specific coumarone-indene resin and/or terpene-based resin having a predetermined softening point were incorporated in predetermined amounts.

## Claims

1. A pneumatic tire, comprising a tread formed from a rubber composition for tires, the rubber composition comprising:
a rubber component;
an inorganic reinforcing agent represented by the formula below, having an average particle size of 1.5 µm or less and a nitrogen adsorption specific surface area of 10 to 120 m²/g;
wet silica; and
at least one of a coumarone-indene resin having a softening point of -20°C to 45°C or a terpene-based resin having a softening point of 100°C to 170°C,
the rubber composition comprising the inorganic reinforcing agent in an amount of 1 to 60 parts by mass per 100 parts by mass of the rubber component,
the rubber component contains styrene-butadiene rubber,
kM₁ ·xSiO_{y} ·zH₂O
wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10,
wherein the pneumatic tire is not a pneumatic tire comprising a tread formed from a rubber composition for tires,
the rubber composition comprising:
a rubber component containing 70 parts by mass of a styrene-butadiene rubber per 100 parts by mass of the rubber component,
90 parts by mass of wet silica per 100 parts by mass of the rubber component,
10 parts by mass of aluminum hydroxide having an average particle size of 0.6 µm and a nitrogen adsorption specific surface area of 15 m²/g per 100 parts by mass of the rubber component and
10 parts by mass of a liquid coumarone-indene resin having a softening point of 10°C per 100 parts by mass of the rubber component or 10 parts by mass of a terpene phenole resin having a softening point of 115°C per 100 parts by mass of the rubber component; and
wherein the average particle size of the inorganic reinforcing agent is a number average particle size which is measured with a transmission electron microscope,
the nitrogen adsorption specific surface area of the inorganic reinforcing agent is determined by the BET method in accordance with ASTM D3037-81 and
the softening point of each of the coumarone-indene resin and the terpene-based resin is determined according to JIS K 6220-1:2001 with a ring and ball softening point measuring apparatus and is defined as the temperature at which the ball drops down.

2. The pneumatic tire according to claim 1,
wherein the inorganic reinforcing agent has an average particle size of 0.69 µm or less and a nitrogen adsorption specific surface area of 10 to 50 m²/g,
the wet silica has a nitrogen adsorption specific surface area of 80 to 300 m²/g, and
the rubber composition comprises the wet silica in an amount of 15 to 130 parts by mass per 100 parts by mass of the rubber component,
wherein the nitrogen adsorption specific surface area of the wet silica is determined by the BET method in accordance with ASTM D3037-81.

3. The pneumatic tire according to claim 1 or 2,
wherein the rubber composition comprises the coumarone-indene resin in an amount of 0.5 to 60 parts by mass per 100 parts by mass of the rubber component.

4. The pneumatic tire according to any one of claims 1 to 3,
wherein the rubber composition comprises the terpene-based resin in an amount of 1 to 40 parts by mass per 100 parts by mass of the rubber component.

5. The pneumatic tire according to any one of claims 1 to 4,
wherein the rubber composition comprises, based on 100% by mass of the rubber component, 9% to 70% by mass of a polybutadiene rubber synthesized using a rare earth catalyst.

6. The pneumatic tire according to any one of claims 1 to 5,
wherein the inorganic reinforcing agent is aluminum hydroxide, and
the rubber composition is obtained by kneading at least the rubber component and the aluminum hydroxide at a discharge temperature of 150°C or higher.

7. The pneumatic tire according to claim 6,
wherein the rubber composition is obtained by kneading in which the discharge temperature is 160°C or higher.

8. A pneumatic tire, comprising a tread formed from a rubber composition for tires,
the rubber composition comprising:
a rubber component;
an inorganic reinforcing agent represented by the formula below, having an average particle size of 1.5 µm or less and a nitrogen adsorption specific surface area of 3 to 120 m²/g;
wet silica; and
a coumarone-indene resin having a softening point of -20°C to 45°C,
the rubber composition comprising the inorganic reinforcing agent in an amount of 1 to 60 parts by mass per 100 parts by mass of the rubber component
the rubber component contains polybutadiene rubber,,
kM₁ ·xSiO_{y} ·zH₂O
wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10
wherein the pneumatic tire is not a pneumatic tire comprising a tread formed from a rubber composition for tires,
the rubber composition comprising:
a rubber component containing 60 parts by mass of a polybutadiene rubber per 100 parts by mass of the rubber component,
60 parts by mass of wet silica per 100 parts by mass of the rubber component,
10 parts by mass of aluminum hydroxide having an average particle size of 0.6 µm and a nitrogen adsorption specific surface area of 15 m²/g per 100 parts by mass of the rubber component and
5 parts by mass of a liquid coumarone-indene resin having a softening point of 5°C to 15°C per 100 parts by mass of the rubber component;
wherein the pneumatic tire is not a pneumatic tire comprising a tread formed from a rubber composition for tires,
the rubber composition comprising:
a rubber component containing 30 parts by mass of a polybutadiene rubber per 100 parts by mass of the rubber component,
90 parts by mass of wet silica per 100 parts by mass of the rubber component,
10 parts by mass of aluminum hydroxide having an average particle size of 0.6 µm and a nitrogen adsorption specific surface area of 15 m²/g per 100 parts by mass of the rubber component and
10 parts by mass of a liquid coumarone-indene resin having a softening point of 10°C per 100 parts by mass of the rubber component; and
wherein the average particle size of the inorganic reinforcing agent is a number average particle size which is measured with a transmission electron microscope,
the nitrogen adsorption specific surface area of the inorganic reinforcing agent is determined by the BET method in accordance with ASTM D3037-81 and
the softening point of the coumarone-indene resin is determined according to JIS K 6220-1:2001 with a ring and ball softening point measuring apparatus and is defined as the temperature at which the ball drops down.

9. The pneumatic tire according to claim 8,
wherein the inorganic reinforcing agent has an average particle size of 0.69 µm or less and a nitrogen adsorption specific surface area of 10 to 50 m²/g,
the wet silica has a nitrogen adsorption specific surface area of 80 to 300 m²/g, and
the rubber composition comprises the wet silica in an amount of 15 to 130 parts by mass per 100 parts by mass of the rubber component,
wherein the nitrogen adsorption specific surface area of the wet silica is determined by the BET method in accordance with ASTM D3037-81.

10. The pneumatic tire according to claim 8 or 9,
wherein the rubber composition comprises the coumarone-indene resin in an amount of 0.5 to 60 parts by mass per 100 parts by mass of the rubber component.

11. The pneumatic tire according to any one of claims 8 to 10,
wherein the rubber composition comprises, based on 100% by mass of the rubber component, 9% to 70% by mass of a polybutadiene rubber synthesized using a rare earth catalyst.

12. The pneumatic tire according to any one of claims 8 to 11,
wherein the inorganic reinforcing agent is aluminum hydroxide, and
the rubber composition is obtained by kneading at least the rubber component and the aluminum hydroxide at a discharge temperature of 150°C or higher.

13. The pneumatic tire according to claim 12,
wherein the rubber composition is obtained by kneading in which the discharge temperature is 160°C or higher.

## Patentansprüche

1. Luftreifen, welcher einen Laufstreifen umfasst, der aus einer Kautschukzusammensetzung für Reifen gebildet ist,
wobei die Kautschukzusammensetzung umfasst:
eine Kautschukkomponente;
ein durch die nachstehende Formel dargestelltes anorganisches Verstärkungsmittel, das eine mittlere Partikelgröße von 1,5 µm oder weniger und eine spezifische Stickstoffadsorptionsoberfläche von 10 bis 120 m²/g aufweist;
nasses Siliciumdioxid; und
mindestens eines von einem Cumaron-Inden-Harz mit einem Erweichungspunkt von -20°C bis 45°C oder einem Terpen-basierten Harz mit einem Erweichungspunkt von 100°C bis 170°C,
wobei die Kautschukzusammensetzung das anorganische Verstärkungsmittel in einer Menge von 1 bis 60 Massenteilen pro 100 Massenteile der Kautschukkomponente umfasst,
die Kautschukkomponente Styrol-Butadien-Kautschuk umfasst,
kM₁·xSiO_{y}·zH₂O
wobei M₁ mindestens ein Metall, das aus der Gruppe bestehend aus Al, Mg, Ti, Ca und Zr ausgewählt ist, oder ein Oxid oder Hydroxid des Metalls darstellt; k eine ganze Zahl von 1 bis 5 darstellt; x eine ganze Zahl von 0 bis 10 darstellt; y eine ganze Zahl von 2 bis 5 darstellt; und z eine ganze Zahl von 0 bis 10 darstellt,
wobei der Luftreifen kein Luftreifen ist, welcher einen Laufstreifen umfasst, der aus einer Kautschukzusammensetzung für Reifen gebildet ist,
wobei die Kautschukzusammensetzung umfasst:
eine Kautschukkomponente, die 70 Massenteile eines Styrol-Butadien-Kautschuks pro 100 Massenteile der Kautschukkomponente enthält,
90 Massenteile nasses Siliciumdioxid pro 100 Massenteile der Kautschukkomponente,
10 Massenteile Aluminiumhydroxid mit einer mittleren Partikelgröße von 0,6 µm und einer spezifischen Stickstoffadsorptionsoberfläche von 15 m²/g pro 100 Massenteile der Kautschukkomponente und
10 Massenteile eines flüssigen Cumaron-Inden-Harzes mit einem Erweichungspunkt von 10°C pro 100 Massenteile der Kautschukkomponente oder 10 Massenteile eines Terpen-Phenol-Harzes mit einem Erweichungspunkt von 115°C pro 100 Massenteile der Kautschukkomponente; und
wobei die mittlere Partikelgröße des anorganischen Verstärkungsmittels eine zahlenmittlere Partikelgröße ist, die mit einem Transmissionselektronenmikroskop gemessen ist,
die spezifische Stickstoffadsorptionsoberfläche des anorganischen Verstärkungsmittels durch das BET-Verfahren gemäß ASTM D3037-81 bestimmt ist und
der Erweichungspunkt eines jeden von dem Cumaron-Inden-Harz und dem Terpen-basierten Harz gemäß JIS K 6220-1:2001 mit einer Ring-und-Kugel-Erweichungspunktmessvorrichtung bestimmt ist und als die Temperatur definiert ist, bei der die Kugel herabfällt.

2. Luftreifen nach Anspruch 1,
wobei das anorganische Verstärkungsmittel eine mittlere Partikelgröße von 0,69 µm oder weniger und eine spezifische Stickstoffadsorptionsoberfläche von 10 bis 50 m²/g aufweist,
das nasse Siliciumdioxid eine spezifische Stickstoffadsorptionsoberfläche von 80 bis 300 m²/g aufweist, und
die Kautschukzusammensetzung das nasse Siliciumdioxid in einer Menge von 15 bis 130 Massenteilen pro 100 Massenteile der Kautschukkomponente umfasst,
wobei die spezifische Stickstoffadsorptionsoberfläche des nassen Siliciumdioxids durch das BET-Verfahren gemäß ASTM D3037-81 bestimmt ist.

3. Luftreifen nach Anspruch 1 oder 2,
wobei die Kautschukzusammensetzung das Cumaron-Inden-Harz in einer Menge von 0,5 bis 60 Massenteilen pro 100 Massenteile der Kautschukkomponente umfasst.

4. Luftreifen nach einem der Ansprüche 1 bis 3,
wobei die Kautschukzusammensetzung das Terpen-basierte Harz in einer Menge von 1 bis 40 Massenteilen pro 100 Massenteile der Kautschukkomponente umfasst.

5. Luftreifen nach einem der Ansprüche 1 bis 4,
wobei die Kautschukzusammensetzung, bezogen auf 100 Massenprozent der Kautschukkomponente, 9 bis 70 Massenprozent eines unter Verwendung eines Seltenerd-Katalysators synthetisierten Polybutadien-Kautschuks umfasst.

6. Luftreifen nach einem der Ansprüche 1 bis 5,
wobei das anorganische Verstärkungsmittel Aluminiumhydroxid ist, und
die Kautschukzusammensetzung durch Verkneten zumindest der Kautschukkomponente und des Aluminiumhydroxids bei einer Auslasstemperatur von 150°C oder höher erhalten ist.

7. Luftreifen nach Anspruch 6,
wobei die Kautschukzusammensetzung durch Verkneten erhalten ist, bei dem die Auslasstemperatur 160°C oder höher ist.

8. Luftreifen, welcher einen Laufstreifen umfasst, der aus einer Kautschukzusammensetzung für Reifen gebildet ist,
wobei die Kautschukzusammensetzung umfasst:
eine Kautschukkomponente;
ein durch die nachstehende Formel dargestelltes anorganisches Verstärkungsmittel, das eine mittlere Partikelgröße von 1,5 µm oder weniger und eine spezifische Stickstoffadsorptionsoberfläche von 3 bis 120 m²/g aufweist;
nasses Siliciumdioxid; und
ein Cumaron-Inden-Harz mit einem Erweichungspunkt von -20°C bis 45°C,
wobei die Kautschukzusammensetzung das anorganische Verstärkungsmittel in einer Menge von 1 bis 60 Massenteilen pro 100 Massenteile der Kautschukkomponente umfasst,
die Kautschukkomponente Polybutadien-Kautschuk enthält,
kM₁·xSiO_{y}·zH₂O
wobei M₁ mindestens ein Metall, das aus der Gruppe bestehend aus Al, Mg, Ti, Ca und Zr ausgewählt ist, oder ein Oxid oder Hydroxid des Metalls darstellt; k eine ganze Zahl von 1 bis 5 darstellt; x eine ganze Zahl von 0 bis 10 darstellt; y eine ganze Zahl von 2 bis 5 darstellt; und z eine ganze Zahl von 0 bis 10 darstellt,
wobei der Luftreifen kein Luftreifen ist, welcher einen Laufstreifen umfasst, der aus einer Kautschukzusammensetzung für Reifen gebildet ist,
wobei die Kautschukzusammensetzung umfasst:
eine Kautschukkomponente, die 60 Massenteile eines Polybutadien-Kautschuks pro 100 Massenteile der Kautschukkomponente enthält,
60 Massenteile nasses Siliciumdioxid pro 100 Massenteile der Kautschukkomponente,
10 Massenteile Aluminiumhydroxid mit einer mittleren Partikelgröße von 0,6 µm und einer spezifischen Stickstoffadsorptionsoberfläche von 15 m²/g pro 100 Massenteile der Kautschukkomponente und
5 Massenteile eines flüssigen Cumaron-Inden-Harzes mit einem Erweichungspunkt von 5°C bis 15°C pro 100 Massenteile der Kautschukkomponente;
wobei der Luftreifen kein Luftreifen ist, welcher einen Laufstreifen umfasst, der aus einer Kautschukzusammensetzung für Reifen gebildet ist,
wobei die Kautschukzusammensetzung umfasst:
eine Kautschukkomponente, die 30 Massenteile eines Polybutadien-Kautschuks pro 100 Massenteile der Kautschukkomponente enthält,
90 Massenteile nasses Siliciumdioxid pro 100 Massenteile der Kautschukkomponente,
10 Massenteile Aluminiumhydroxid mit einer mittleren Partikelgröße von 0,6 µm und einer spezifischen Stickstoffadsorptionsoberfläche von 15 m²/g pro 100 Massenteile der Kautschukkomponente und
10 Massenteile eines flüssigen Cumaron-Inden-Harzes mit einem Erweichungspunkt von 10°C pro 100 Massenteile der Kautschukkomponente; und
wobei die mittlere Partikelgröße des anorganischen Verstärkungsmittels eine zahlenmittlere Partikelgröße ist, die mit einem Transmissionselektronenmikroskop gemessen ist,
die spezifische Stickstoffadsorptionsoberfläche des anorganischen Verstärkungsmittels durch das BET-Verfahren gemäß ASTM D3037-81 bestimmt ist, und
der Erweichungspunkt des Cumaron-Inden-Harzes gemäß JIS K 6220-1:2001 mit einer Ring-und-Kugel-Erweichungspunktmessvorrichtung bestimmt ist und als die Temperatur definiert ist, bei der die Kugel herabfällt.

9. Luftreifen nach Anspruch 8,
wobei das anorganische Verstärkungsmittel eine mittlere Partikelgröße von 0,69 µm oder weniger und eine spezifische Stickstoffadsorptionsoberfläche von 10 bis 50 m²/g aufweist,
das nasse Siliciumdioxid eine spezifische Stickstoffadsorptionsoberfläche von 80 bis 300 m²/g aufweist, und
die Kautschukzusammensetzung das nasse Siliciumdioxid in einer Menge von 15 bis 130 Massenteilen pro 100 Massenteile der Kautschukkomponente umfasst,
wobei die spezifische Stickstoffadsorptionsoberfläche des nassen Siliciumdioxids durch das BET-Verfahren gemäß ASTM D3037-81 bestimmt ist.

10. Luftreifen nach Anspruch 8 oder 9,
wobei die Kautschukzusammensetzung das Cumaron-Inden-Harz in einer Menge von 0,5 bis 60 Massenteilen pro 100 Massenteile der Kautschukkomponente umfasst.

11. Luftreifen nach einem der Ansprüche 8 bis 10,
wobei die Kautschukzusammensetzung, bezogen auf 100 Massenprozent der Kautschukkomponente, 9 bis 70 Massenprozent eines unter Verwendung eines Seltenerd-Katalysators synthetisierten Polybutadien-Kautschuks umfasst.

12. Luftreifen nach einem der Ansprüche 8 bis 11,
wobei das anorganische Verstärkungsmittel Aluminiumhydroxid ist, und
die Kautschukzusammensetzung durch Verkneten zumindest der Kautschukkomponente und des Aluminiumhydroxids bei einer Auslasstemperatur von 150°C oder höher erhalten ist.

13. Luftreifen nach Anspruch 12,
wobei die Kautschukzusammensetzung durch Verkneten erhalten ist, bei dem die Auslasstemperatur 160°C oder höher ist.

## Revendications

1. (modifiée) Pneumatique, comprenant une bande formée à partir d'une composition de caoutchouc pour pneus,
la composition de caoutchouc comprenant :
un composant de caoutchouc ;
un agent de renforcement inorganique représenté par la formule ci-dessous, ayant une taille de particule moyenne de 1,5 µm ou moins et une surface spécifique d'adsorption d'azote de 10 à 120 m²/g ;
de la silice humide ; et
au moins une d'une résine de coumarone-indène ayant un point de ramollissement de -20 °C à 45 °C ou d'une résine à base de terpène ayant un point de ramollissement de 100 °C à 170 °C,
la composition de caoutchouc comprenant l'agent de renforcement inorganique en une quantité de 1 à 60 parties en masse par 100 parties en masse du composant de caoutchouc,
le composant de caoutchouc contient un caoutchouc de styrène-butadiène, kM₁•xSiO_{y}•zH₂O,
dans lequel M₁ représente au moins un métal choisi dans le groupe constitué par Al, Mg, Ti, Ca et Zr, ou un oxyde ou hydroxyde du métal ; k représente un nombre entier de 1 à 5 ; x représente un nombre entier de 0 à 10 ; y représente un nombre entier de 2 à 5 ; et z représente un nombre entier de 0 à 10,
dans lequel le pneumatique n'est pas un pneumatique comprenant une bande formée d'une composition de caoutchouc pour pneus,
la composition de caoutchouc comprenant :
un composant de caoutchouc contenant 70 parties en masse d'un caoutchouc styrène-butadiène par 100 parties en masse du composant de caoutchouc,
90 parties en masse de silice humide en masse par 100 parties en masse du composant de caoutchouc,
10 parties en masse d'hydroxyde d'aluminium ayant une taille de particule moyenne de 0,6 µm et une surface spécifique d'adsorption d'azote de 15 m²/g par 100 parties en masse du composant de caoutchouc et 10 parties en masse d'une résine de coumarone-indène liquide ayant un point de ramollissement de 10 °C par 100 parties en masse du composant de caoutchouc ou 10 parties en masse d'une résine de terpène phénol ayant un point de ramollissement de 115 °C par 100 parties en masse du composant de caoutchouc ; et
dans lequel la taille de particule moyenne de l'agent de renforcement inorganique est une taille de particule moyenne en nombre qui est mesurée avec un microscope électronique à transmission,
la surface spécifique d'adsorption d'azote de l'agent de renforcement inorganique est déterminée par le procédé BET selon la norme ASTM D3037-81 et
le point de ramollissement de chacune de la résine de coumarone-indène et de la résine à base de terpène est déterminé selon la norme JIS K 6220-1:2001 avec un appareil de mesure de point de ramollissement d'anneau et de boule et étant défini comme la température à laquelle la boule chute.

2. Pneumatique selon la revendication 1,
dans lequel l'agent de renforcement inorganique a une taille de particule moyenne de 0,69 µm ou moins et une surface spécifique d'adsorption d'azote de 10 à 50 m²/g,
la silice humide a une surface spécifique d'adsorption d'azote de 80 à 300 m²/g, et
la composition de caoutchouc comprend la silice humide en une quantité de 15 à 130 parties en masse par 100 parties en masse du composant de caoutchouc,
dans lequel la surface spécifique d'adsorption d'azote de la silice humide est déterminée par le procédé BET selon la norme ASTM D3037-81.

3. Pneumatique selon la revendication 1 ou 2,
dans lequel la composition de caoutchouc comprend la résine de coumarone-indène en une quantité de 0,5 à 60 parties en masse par 100 parties en masse du composant de caoutchouc.

4. Pneumatique selon l'une quelconque des revendications 1 à 3,
dans lequel la composition de caoutchouc comprend la résine à base de terpène en une quantité de 1 à 40 parties en masse par 100 parties en masse du composant de caoutchouc.

5. Pneumatique selon l'une quelconque des revendications 1 à 4,
dans lequel la composition de caoutchouc comprend, sur la base de 100 % en masse du composant de caoutchouc, 9 % à 70 % en masse d'un caoutchouc de polybutadiène synthétisé en utilisant un catalyseur de terre rare.

6. Pneumatique selon l'une quelconque des revendications 1 à 5,
dans lequel l'agent de renforcement inorganique est l'hydroxyde d'aluminium, et
la composition de caoutchouc est obtenue en pétrissant au moins le composant de caoutchouc et l'hydroxyde d'aluminium à une température de déchargement de 150 °C ou plus.

7. Pneumatique selon la revendication 6,
dans lequel la composition de caoutchouc est obtenue par pétrissage dans lequel la température de déchargement est de 160 °C ou plus.

8. Pneumatique, comprenant une bande formée d'une composition de caoutchouc pour pneus,
la composition de caoutchouc comprenant :
un composant de caoutchouc ;
un agent de renforcement inorganique représenté par la formule ci-dessous, ayant une taille de particule moyenne de 1,5 µm ou moins et une surface spécifique d'adsorption d'azote de 3 à 120 m²/g ;
de la silice humide ; et
une résine de coumarone-indène ayant un point de ramollissement de -20 °C à 45 °C,
la composition de caoutchouc comprenant l'agent de renforcement inorganique en une quantité de 1 à 60 parties en masse par 100 parties en masse du composant de caoutchouc
le composant de caoutchouc contient du caoutchouc de polybutadiène,
kM₁•xSiO_{y}•zH₂O
dans lequel M₁ représente au moins un métal choisi dans le groupe constitué par Al, Mg, Ti, Ca et Zr, ou un oxyde ou un hydroxyde du métal ; k représente un nombre entier de 1 à 5 ; x représente un nombre entier de 0 à 10 ; y représente un nombre entier de 2 à 5 ; et z représente un nombre entier de 0 à 10
dans lequel le pneumatique n'est pas un pneumatique comprenant une bande formée à partir d'une composition de caoutchouc pour pneus, la composition de caoutchouc comprenant :
un composant de caoutchouc contenant 60 parties en masse d'un caoutchouc de polybutadiène par 100 parties en masse du composant de caoutchouc,
60 parties en masse de silice humide par 100 parties en masse du composant de caoutchouc,
10 parties en masse d'hydroxyde d'aluminium ayant une taille de particule moyenne de 0,6 µm et une surface spécifique d'adsorption d'azote de 15 m2/g par 100 parties en masse du composant de caoutchouc et
5 parties en masse d'une résine de coumarone-indène liquide ayant un point de ramollissement de 5 °C à 15 °C par 100 parties en masse du composant de caoutchouc ;
dans lequel le pneumatique n'est pas un pneumatique comprenant une bande formée à partir d'une composition de caoutchouc pour pneus,
la composition de caoutchouc comprenant :
un composant de caoutchouc contenant 30 parties en masse d'un caoutchouc de polybutadiène par 100 parties en masse du composant de caoutchouc,
90 parties en masse de silice humide par 100 parties en masse du composant de caoutchouc,
10 parties en masse d'hydroxyde d'aluminium ayant une taille de particule moyenne de 0,6 µm et une surface spécifique d'adsorption d'azote de 15 m²/g par 100 parties en masse du composant de caoutchouc et
10 parties en masse d'une résine de coumarone-indène liquide ayant un point de ramollissement de 10 °C par 100 parties en masse du composant de caoutchouc ; et
dans lequel la taille de particule moyenne de l'agent de renforcement inorganique est une taille de particule moyenne en nombre qui est mesurée par un microscope électronique à transmission,
la surface spécifique d'adsorption d'azote de l'agent de renforcement inorganique est déterminée par le procédé BET selon la norme ASTM D3037-81 et
le point de ramollissement de la résine de coumarone-indène est déterminé selon la norme JIS K 6220-1:2001 avec un appareil de mesure de point de ramollissement d'anneau et de boule et est défini comme la température à laquelle la boule chute.

9. Pneumatique selon la revendication 8,
dans lequel l'agent de renforcement inorganique a une taille de particule moyenne de 0,69 µm ou moins et une surface spécifique d'adsorption d'azote de 10 à 50 m²/g,
la silice humide a une surface spécifique d'adsorption d'azote de 80 à 300 m²/g, et
la composition de caoutchouc comprend la silice humide en une quantité de 15 à 130 parties en masse par 100 parties en masse du composant de caoutchouc,
la surface spécifique d'adsorption d'azote de la silice humide étant déterminée par le procédé BET selon la norme ASTM D3037-81.

10. Pneumatique selon la revendication 8 ou 9,
dans lequel la composition de caoutchouc comprend la résine de coumarone-indène en une quantité de 0,5 à 60 parties en masse par 100 parties en masse du composant de caoutchouc.

11. Pneumatique selon l'une quelconque des revendications 8 à 10,
dans lequel la composition de caoutchouc comprend, sur la base de 100 % en masse du composant de caoutchouc, 9 % à 70 % d'un caoutchouc de polybutadiène synthétisé en utilisant un catalyseur de terre rare.

12. Pneumatique selon l'une quelconque des revendications 8 à 11,
dans lequel l'agent de renforcement inorganique est l'hydroxyde d'aluminium, et
la composition de caoutchouc est obtenue par pétrissage d'au moins le composant de caoutchouc et de l'hydroxyde d'aluminium à une température de déchargement de 150 °C ou plus.

13. Pneumatique selon la revendication 12,
dans lequel la composition de caoutchouc est obtenue par pétrissage dans lequel la température de déchargement est de 160 °C ou plus.
